## Europäisches Patentamt
## European Patent Office
## Office européen des brevets

(11) Numéro de publication : **0 109 658**
**B1**

(12) # FASCICULE DE BREVET EUROPÉEN

(45) Date de publication du fascicule du brevet :
11.01.89

(51) Int. Cl.⁴ : **H 04 L 25/49**

(21) Numéro de dépôt : **83111482.2**

(22) Date de dépôt : **17.11.83**

(54) Equipement de transmission synchrone de données.

(30) Priorité : **23.11.82 FR 8219562**

(43) Date de publication de la demande :
**30.05.84 Bulletin 84/22**

(45) Mention de la délivrance du brevet :
**11.01.89 Bulletin 89/02**

(84) Etats contractants désignés :
**BE DE FR GB IT LU NL**

(56) Documents cités :
**DE-A- 2 742 770
FR-A- 2 452 829
US-A- 3 810 155
US-A- 3 816 657**

(73) Titulaire : **ALCATEL CIT**
**33, rue Emeriau**
**F-75015 Paris (FR)**

(72) Inventeur : **Levy, Michel**
**63 Domaine de Montvoisin Gometz La Ville**
**F-91400 Orsay (FR)**
Inventeur : **Surie, Serge**
**60, rue Bronzac**
**F-94240 L'Hay les Roses (FR)**

(74) Mandataire : **Weinmiller, Jürgen et al**
**Lennéstrasse 9 Postfach 24**
**D-8133 Feldafing (DE)**

**Description**

La présente invention est relative à la transmission synchrone de données en vue, notamment, du raccordement numérique d'un central de commutation téléphonique à des installations d'abonnés en utilisant les lignes existantes. Elle concerne plus particulièrement les systèmes de transmission de données utilisant en bande de base un signal à deux niveaux obtenu par un code résultant d'une superposition du biphase L et du biphase modifié.

Le biphase L également connu sous la dénomination « Manchester » transforme une suite d'informations binaires à transmettre disponibles à une cadence 1/T en un signal de transmission formé d'une succession d'éléments de signaux à deux niveaux, sans recouvrement, chacun durant un intervalle Baud T et présentant au milieu de cet intervalle Baud une transition dont le sens dépend de la valeur de l'information binaire codée. Ce signal de transmission s'obtient par une combinaison de la suite des informations binaires à transmettre et du signal d'horloge cadençant cette suite par une porte logique de type « ou exclusif ».

Le biphase modifié se distingue du biphase L par un déphasage de $\pi/2$ du signal d'horloge.

Le biphase L et le biphase modifié peuvent être considérés comme des modulations à double bande latérale de deux fonctions de Walsh en quadrature :

$$\text{signe} \left( \sin \frac{2\pi t}{T} \right) , \quad \text{signe} \left( \cos \frac{2\pi t}{T} \right)$$

et peuvent être combinés par une modulation en quadrature pour définir un code qui est dénommé ci-après Wacx et dont le signal en ligne z'(t) peut s'exprimer à un facteur multiplicatif près par :

$$z'(t) = \sum_K \left[ (a_K + b_K)\,\text{signe} \left( \cos \frac{2\pi t}{T} \right) + (b_K - a_K)\,\text{signe} \left( \sin \frac{2\pi t}{T} \right) \right] d(t - KT) \quad (1)$$

$a_K$ et $b_K$ étant deux suites synchrones d'informations binaires à transmettre de valeur $\pm 1$ disponibles à la cadence 1/T et d(t — KT) une fonction du temps ayant une valeur unitaire sur le K-ième intervalle Baud et nulle en dehors. Ce code Wacx présente l'intérêt de doubler le débit d'informations par rapport aux codes biphase et biphase modifié sans pour autant doubler la largeur de bande occupée. Une étude détaillée en est faite dans la demande de brevet français déposée par la demanderesse sous le n° 82 02227 le 11 février 1982.

Des variantes du code de transmission Wacx apparaissent dans la technique antérieure sous le nom de code quadriphase. La demande de brevet français 2 452 829 décrit notamment un système de transmission synchrone de données dans lequel les informations binaires à transmettre sont assemblées par groupes successifs de deux transmis l'un après l'autre au cours d'intervalles de temps égaux au moyen d'un élément de signal composé du groupe suivi de son complément à savoir 0011, 1001, 0110 et 1100 attribués aux dibits 00, 10, 01 et 11 respectivement ce qui correspond aux fonctions de forme précitées :

$$\pm \text{signe} \left( \sin \frac{2\pi t}{T} \right) ; \quad \pm \text{signe} \left( \cos \frac{2\pi t}{T} \right)$$

La reconnaissance de forme nécessaire en réception pour identifier les valeurs binaires des informations transmises est perturbée par les déformations subies par les éléments de signaux au cours de leur transmission. Cette demande de brevet propose un procédé particulier de reconnaissance de forme peu sensible à ces déformations qui consiste à échantillonner les éléments de signal reçus tous les quarts de temps Baud et à déduire les valeurs binaires des informations transmises de la différence entre les échantillonnages au premier et troisième quarts de temps Baud et de la différence entre les échantillonnages au deuxième et quatrième quarts de temps Baud.

La présente invention a pour but un équipement de transmission synchrone de données utilisant le code Wacx, simple et peu coûteux, adapté à la réalisation d'une liaison de transmission de données entre un central de commutation téléphonique et une installation d'abonné par l'intermédiaire de la ligne existante.

Elle a pour objet un équipement de transmission synchrone de données dans lequel les données, disponibles sous forme d'informations binaires, sont assemblées par groupes successifs de deux transmis l'un après l'autre au cours d'intervalles de temps égaux et successifs de durée T dits temps Baud au moyen d'éléments de signal occupant chacun un temps Baud et prenant chacun, en bande de base, une parmi quatre formes possibles qui sont définies par les fonctions :

$$\pm \text{signe} \left( \sin \frac{2\pi t}{T} \right) ; \quad \pm \text{signe} \left( \cos \frac{2\pi t}{T} \right)$$

et qui correspondent aux quatre valeurs possibles pour un groupe.

Selon une caractéristique, l'équipement comporte en réception un circuit de détection directe assurant la reconnaissance des formes des éléments de signal reçu à partir de leur échantillonnage au cours des deuxième et troisième quarts de temps Baud.

Outre, une extrême simplicité de réalisation, cette détection directe a l'avantage de ne prendre en compte que le milieu des éléments de signaux qui se trouve être la portion la moins déformée lors de l'acheminement en bande de base des éléments de signal par une ligne bifilaire.

Selon une autre caractéristique, l'équipement comporte en réception un circuit de récupération de rythme extrayant le rythme Baud des éléments de signal reçus à partir d'une comparaison de deux versions de ces derniers retardées l'une par rapport à l'autre d'un délai égal à un demi-temps Baud et d'un repérage, sur une durée de plusieurs temps Baud, des durées d'un demi-temps Baud espacées entre elles d'un demi-temps Baud au cours desquelles la comparaison est toujours négative.

Selon une variante dans laquelle la forme d'un élément de signal codant un groupe de deux informations binaires résulte d'un choix entre les fonctions de forme :

$$\text{signe} \left( \sin \frac{2\,\pi t}{T} \right) , \quad \text{signe} \left( \cos \frac{2\,\pi t}{T} \right)$$

dicté par la valeur de l'une des informations du groupe et d'un choix entre les versions complémentées ou non de ces fonctions de forme dicté par la valeur de l'autre information du groupe, l'équipement comporte, à l'émission, un codeur différentiel opérant sur l'autre information du groupe avant son utilisation pour le choix des versions complémentées ou non des fonctions de forme et, à la réception, un décodeur différentiel redonnant à l'autre information sa forme primitive après détection de sa forme différentielle par reconnaissance du caractère complémenté ou non de l'élément de signal reçu.

Grâce à ces codage et décodage différentiels, une inversion de polarité effectuée sur une ligne bifilaire acheminant les éléments de signal en bande de base ne modifie pas les valeurs détectées en réception pour les informations transmises.

D'autres caractéristiques et avantages de l'invention ressortiront de la description ci-après d'un mode de réalisation de l'équipement donné à titre d'exemple. Cette description sera faite en regard du dessin dans lequel :

la figure 1 représente un codeur direct et différentiel,

la figure 2 illustre la structure d'un récepteur à détection directe et différentielle adapté au signal engendré par le codeur de la figure 1,

la figure 3 détaille le circuit de récupération de rythme Baud du récepteur de la figure 2.

et la figure 4 détaille la base du temps du récepteur de la figure 2.

Il va être décrit ci-après un système de transmission de données en bande de base qui s'accommode des inversions de polarité de la ligne de transmission et qui réalise la transmission d'une suite de données binaires isochrones $\{\alpha_i\}$ se succédant à un rythme $2/T$ à l'aide d'un code Wacx ayant un temps Baud de durée $T$.

Comme cela ressort de l'expression de son signal en ligne (relation 1), le code Wacx fait correspondre à un groupe de deux informations binaires $a_K b_K$ de valeur $\pm 1$ un élément de signal de durée $T$ pouvant prendre quatre formes possibles résultant d'un choix entre les fonctions de forme :

$$\text{signe} \left( \sin \frac{2\,\pi t}{T} \right) \quad \text{et signe} \quad \left( \cos \frac{2\,\pi t}{T} \right)$$

et d'un choix entre les versions complémentées ou non complémentées de ces fonctions de forme. Comme le choix entre les fonctions de forme s'accommode des inversions de polarité d'une ligne bifilaire de transmission, il est avantageux de l'utiliser pour coder l'une des informations qui sera prise directement égale à chaque terme pair ou à chaque terme impair de la suite $\{\alpha_i\}$. Cette utilisation conduit à adopter le choix de la version complémentée ou non pour le codage de l'autre information. Comme ce dernier choix est sensible aux inversions de polarité d'une ligne bifilaire de transmission, l'autre information sera prise égale à un codage différentiel de chaque terme impair ou chaque terme pair de la suite $\{\alpha_i\}$. Ces diverses considérations aboutissent à déterminer les informations $a_K$, $b_K$ en fonction des termes de la suite $\{\alpha_i\}$ de la manière suivante, en définissant l'indice $j$ comme égal à $i/2$ pour $i$ pair et $(i + 1)/2$ pour $i$ impair :

$$\left. \begin{array}{l} a_j = \alpha_{2j-1} \cdot b_j \\ b_j = \alpha_{2j} \cdot b_{j-1} \end{array} \right\} \tag{2}$$

ce qui apparaît plus clairement en exprimant le signal en bande de base $z'(t)$ résultant d'un codage Wacx sous la forme :

$$z'(t) = \sum_K b_K \left[ (1 + a_K b_K) \text{signe} \left( \cos \frac{2\,\pi t}{T} \right) + (1 - a_K b_K) \left( \text{signe} \sin \frac{2\,\pi t}{T} \right) \right] d(t - KT)$$

qui s'exprime en fonction de la suite $\{\alpha_i\}$ de la manière suivante :

$$z'(t) = \sum_j b_{j-1} \cdot 2j \left[ (1 + \alpha_{2j-1}) \, \text{signe} \left( \cos \frac{2\pi t}{T} \right) + (1 - \alpha_{2j-1}) \, \text{signe} \left( \sin \frac{2\pi t}{T} \right) \right] d(t - jT)$$

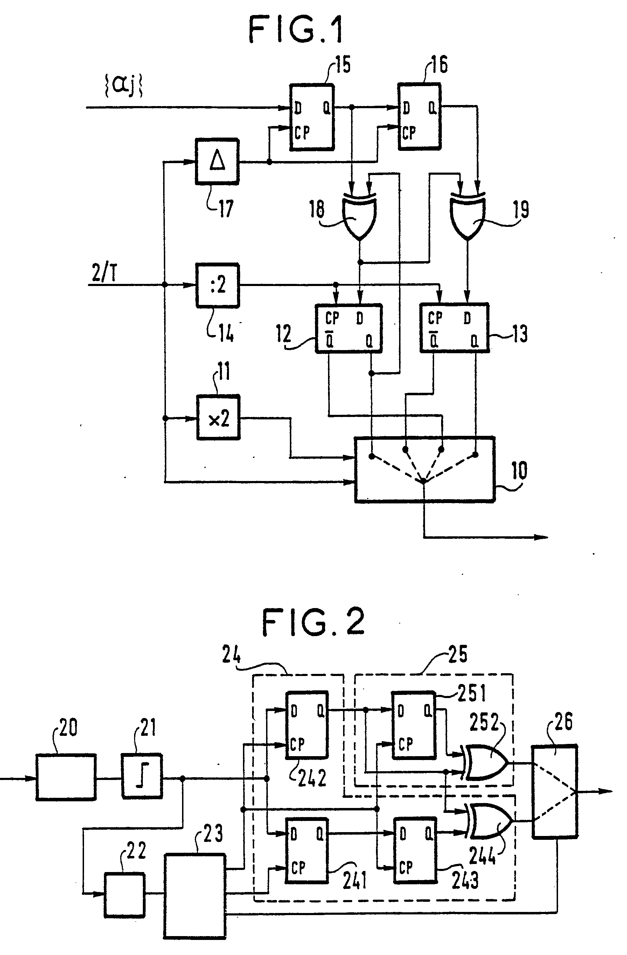

Un codeur engendrant cette forme d'onde est représenté à la figure 1. Il synthétise cette forme d'onde par quart de temps Baud en mettant à profit le fait qu'elle peut également s'écrire :

$$z'(t) = \sum_K \left[ b_K \left( \text{signe} \left( \cos \frac{2\pi}{T} t \right) + \text{signe} \left( \sin \frac{2\pi t}{T} \right) \right) + \right.$$
$$\left. + a_K \left( \text{signe} \left( \cos \frac{2\pi}{T} t \right) - \text{signe} \left( \sin \frac{2\pi t}{T} \right) \right) \right] d(t - TK)$$

ou encore, compte tenu en outre du facteur multiplicatif 1/2 dont doit être affectée en fait l'expression du second membre :

$$z'(t) = \sum_K b_K \, g \left( t - KT - \frac{T}{4} \right) - a_K \, g \left( t - KT - \frac{2T}{4} \right) - b_K \, g \left( t - KT - \frac{3T}{4} \right) + a_K \, g \left( t - KT - \frac{4T}{4} \right)$$

en prenant pour fonction $g[t - KT - mT'/4]$ une fonction égale à l'unité dans l'intervalle de temps

$$\left[ KT + (m-1)\frac{T}{4}, KT + m\frac{T}{4} \right]$$

et nulle en dehors et qui montre que le signal en bande de base résultant d'un codage Wacx prend au cours d'un K-ième temps Baud la valeur $b_K$ pendant le premier quart de temps, la valeur $- a_K$ pendant le deuxième quart de temps, $- b_K$ pendant le troisième quart de temps et $a_K$ pendant le dernier quart de temps. Compte-tenu des relations (2), le signal en bande de base résultant d'un codage Wacx peut donc être engendré pendant un j-ième temps Baud en lui affectant au cours des quarts de temps successifs les valeurs :

$$\alpha_{2j} \cdot b_{j-1} \; ; \quad - \alpha_{2j-1} \cdot b_j \; ; \quad - \alpha_{2j} \, b_{j-1} \; ; \quad \alpha_{2j-1} \, b_j$$

En logique binaire 0, 1 qui est la forme sous laquelle la suite de données $\{\alpha_i\}$ est disponible, le produit correspond à la fonction logique « ou exclusif » et le changement de signe à la complémentation.

Le codeur comporte un multiplexeur 10 à quatre entrées 0, 1, 2, 3 qui engendre son signal de sortie à partir de quatre signaux distincts définissant les valeurs du signal $z'(t)$ chacun pendant l'un des quarts d'un temps Baud. Ce multiplexeur 10 a ses entrées explorées chacune pendant un quart de temps Baud dans l'ordre 0, 1, 2, 3 grâce à un adressage à deux bits parallèles recevant d'une part le rythme 2/T de la suite de données $\{\alpha_i\}$ et d'autre part un rythme double 4/T déduit du rythme précédent par un multiplicateur par deux 11. Sa sortie qui constitue celle du codeur est destinée à être raccordée à l'extrémité d'une ligne bifilaire de transmission par l'intermédiaire d'un circuit d'adaptation classique.

Une bascule de type D12 connectée par ses sorties Q et $\overline{Q}$ aux entrées 0 et 2 du multiplexeur 10 mémorise la valeur $\alpha_{2j} \cdot b_{j-1}$ pendant chaque temps Baud. Une autre bascule de type D13 connectée par ses sorties Q et $\overline{Q}$ aux entrées 3 et 1 du multiplexeur 10 mémorise la valeur $\alpha_{2j-1} \cdot b_j$ pendant chaque temps Baud. Ces deux bascules 12 et 13 sont déclenchées au début de chaque temps Baud par un signal d'horloge engendré par un circuit diviseur par deux 14 à partir du rythme 2/T de la suite de données $\{\alpha_i\}$.

Deux autres bascules de type D15 et 16 constituent un convertisseur série-parallèle délivrant simultanément les valeurs $\alpha_{2j}$ et $\alpha_{2j-1}$. Elles sont déclenchées à un rythme double de celui des bascules 12, 13 avec un léger retard sur ces dernières engendré par un circuit à retard 17 traversé par le signal de rythme 2/T de la suite de données $\{\alpha_i\}$. La première bascule 15 reçoit sur son entrée D la suite des données $\{\alpha_i\}$ appliquée au codeur et délivre sur sa sortie Q, en fin de chaque deuxième demi-temps Baud et sur une durée $\Delta$ du premier demi-temps Baud suivant, le terme $\alpha_{2j}$. La deuxième bascule 16 a son entrée D connectée à la sortie Q de la première 15 et délivre sur sa sortie Q, en fin de chaque deuxième demi-temps Baud et sur une durée $\Delta$ du premier demi-temps Baud suivant, le terme $\alpha_{2j-1}$.

Une porte logique de type « ou exclusif » 18 à deux entrées assure avec la bascule 12 le codage différentiel des termes pairs de la suite des données $\{\alpha_i\}$. Sa sortie est connectée à l'entrée D de la bascule 12. L'une de ses entrées est connectée à la sortie Q de la bascule 15 délivrant le terme $\alpha_2$ tandis que l'autre est connectée en réaction à la sortie Q de la bascule 12 délivrant le terme $b_{j-1}$.

EP 0 109 658 B1

Une autre porte logique de type « ou exclusif » 19 à deux entrées connectées l'une à la sortie Q de la bascule 16 délivrant le terme $\alpha_{2j-1}$ et l'autre à la sortie de la porte logique de type « ou exclusif » 18 délivrant le terme $b_j$ engendre le terme $\alpha_{2j-1} \cdot b_j$ et l'applique à l'entrée D de la bascule 13.

Les quatre formes possibles de l'élément de signal résultant d'un codage Wacx correspondant, comme cela a été mentionné précédemment, à celles des fonctions :

$$\pm \text{signe} \left( \sin \frac{2\pi t}{T} \right) \; ; \; \pm \text{signe} \left( \cos \frac{2\pi t}{T} \right)$$

peuvent être distinguées entre elles à partir de leur étude sur une durée T/2. Dans la succession des éléments de signal au cours du temps, il apparaît des impulsions ou absences d'impulsions de largeur T/4, 2T/4, 3T/4 et T. Les impulsions ou absences d'impulsion de largeur T/4 sont les plus déformées par les lignes de transmission en raison du comportement de ces lignes en filtre passe-bas. Comme elles n'apparaissent qu'en début ou en fin de temps Baud, il est avantageux de ne pas en tenir compte lors de la distinction entre les quatre formes possibles d'un élément de signal en effectuant cette dernière à partir d'une étude portant sur la demi-période centrale du temps Baud.

La figure 2 illustre la structure d'un récepteur à détection directe et différentielle récupérant les valeurs de la suite de données $\{\alpha_i\}$ transmise à partir d'un échantillonnage des deuxième et troisième quarts de temps Baud de chaque élément de signal du codage Wacx. Ce récepteur comporte en tête un circuit de filtrage et d'égalisation de ligne 20 suivi d'un limiteur absolu 21 assurant une remise en forme binaire du signal reçu. Le limiteur absolu 21 est suivi d'une part d'un circuit de récupération de rythme Baud 22 synchronisant une base de temps 23 et d'autre part d'un circuit de détection directe 24 délivrant sous le contrôle de la base de temps 23 les termes impairs de la suite de données $\{\alpha_i\}$ et le codage différentiel des termes pairs de cette même suite, d'un décodeur différentiel 25 délivrant les termes pairs de la suite de données $\{\alpha_i\}$ et d'un multiplexeur 26 recombinant les termes pairs et impairs de cette même suite sous le contrôle de la base de temps 23.

Le circuit de détection directe 24 comporte trois bascules de type D241, 242, 243 et une porte logique de type « ou exclusif » 244. Les deux bascules de type D241, 242 sont connectées par leur entrée D à la sortie du limiteur absolu 21 et par leurs entrées d'horloge CP à des sorties de la base de temps 23. Elles assurent, sous la commande de la base de temps 23, l'échantillonnage du signal reçu, l'une 241 au milieu du deuxième quart de chaque temps Baud alors que le signal reçu a, à cet instant, la valeur $\alpha_{2j-1} \cdot b_j$ ou la valeur opposée selon qu'il y a ou non inversion de polarité et l'autre 242 au milieu du troisième quart de chaque temps Baud alors que le signal reçu a, à cet instant, la valeur $\alpha_{2j} \cdot b_{j-1}$ qui est aussi égale à $b_j$ ou la valeur opposée selon qu'il y a ou non inversion de polarité. La troisième bascule de type D243 connectée par son entrée d'horloge CP en parallèle sur celle de la bascule 242 et par son entrée D sur la sortie Q de la bascule 241 retarde d'un quart de temps Baud l'échantillon pris au cours du deuxième quart de temps Baud afin de le synchroniser avec celui pris pendant le troisième quart de temps Baud. La porte logique de type « ou exclusif » 244 à deux entrées connectées aux sorties Q des bascules 242 et 243 effectue le produit des valeurs $\alpha_{2j-1} \cdot b_j$ et $b_j$ ou de leurs valeurs opposées disponibles en sortie de ces bascules et engendre ainsi les termes impairs de la suite des données $\{\alpha_i\}$.

Le décodeur différentiel 25 comporte une bascule de type D251 connectée par son entrée d'horloge CP à celle de la bascule 242 du circuit de détection directe 24 et par son entrée D à la sortie Q de cette dernière bascule 242, et une porte logique de type « ou exclusif » 252 à deux entrées connectées l'une à l'entrée D de la bascule 251 et l'autre à la sortie Q de cette même bascule 251. La bascule 251 apporte un retard d'un temps Baud. Recevant en entrée la valeur $b_j$ ou son opposé, elle délivre sur sa sortie Q la valeur $b_{j-1}$ ou son opposé. La porte logique de type « ou exclusif » 252 effectue le produit des deux valeurs $b_j$ et $b_{j-1}$ c'est-à-dire $\alpha_{2j} \cdot b_{j-1}$ et $b_{j-1}$ ou des deux valeurs opposées disponibles à l'entrée D et à la sortie Q de la bascule 252 et engendre ainsi les termes pairs de la suite $\{\alpha_i\}$.

Le multiplexeur 26 a ses deux entrées de données connectées aux sorties des portes logiques de type « ou exclusif » 244 et 252. Il reçoit sur son entrée d'adressage un signal d'horloge à la fréquence Baud présentant des transitions au milieu des premier et troisième quarts de chaque temps Baud du signal reçu et assurant l'adressage de la sortie de la porte logique de type « ou exclusif » 244 depuis le milieu du troisième quart de temps Baud du signal reçu jusqu'au milieu du premier quart de temps Baud suivant et l'adressage de la sortie de la porte logique de type « ou exclusif » 251 le restant du temps. Le multiplexeur 26 délivre ainsi en sortie la suite des données $\{\alpha_i\}$.

On a vu précédemment que le signal résultant d'un codage Wacx prenait au cours d'un K-ième temps Baud la valeur $b_K$ pendant le premier quart de temps, $-a_K$ pendant le deuxième quart de temps, $-b_K$ pendant le troisième quart de temps et $a_K$ pendant le dernier quart de temps. Il a par conséquent sur la première et la deuxième moitiés d'un temps Baud des formes qui se déduisent l'une de l'autre par complémentation. Cette propriété de symétrie est mise à profit pour la récupération en réception du rythme Baud qui s'effectue en comparant sur une durée de plusieurs temps Baud consécutifs, deux versions du signal reçu retardées l'une par rapport à l'autre d'un demi-temps Baud avec un espacement d'un demi-temps Baud et en adoptant comme deuxième moitié de temps Baud les intervalles de temps durant un demi-temps Baud où le résultat de la comparaison est toujours négatif. Pour que ce mode de récupération de rythme fonctionne, il est nécessaire que la complémentarité de forme au sein d'un même

5

temps Baud ne se retrouve pas de manière systématique entre deux temps Baud consécutifs ce qui est généralement le cas et qui peut toujours être obtenu par un embrouillage de la suite des données à transmettre.

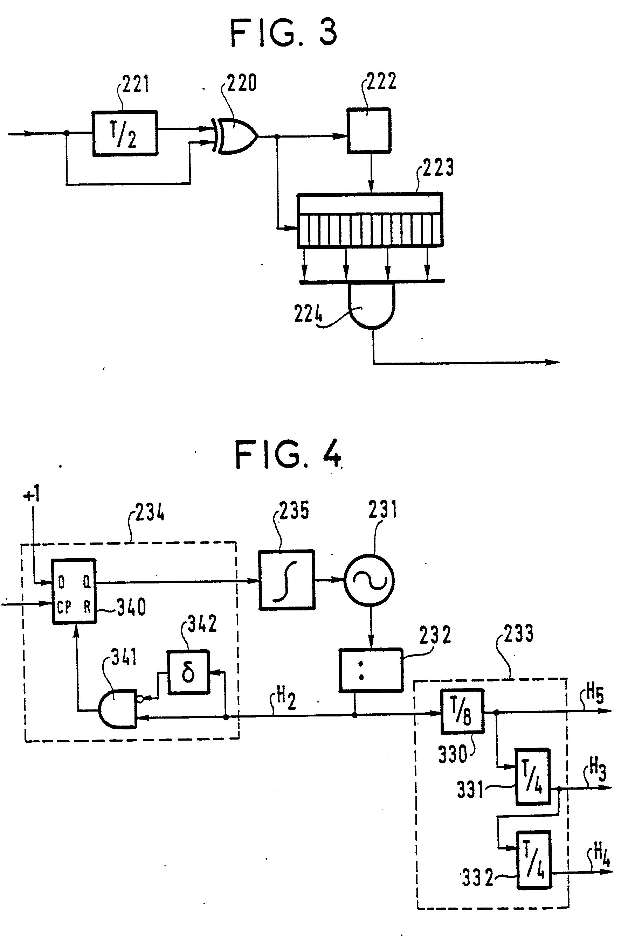

La figure 3 illustre la structrure d'un circuit de récupération de rythme 22 fonctionnant de cette manière. Celui-ci comporte une porte logique de type « ou exclusif » 220 à deux entrées connectées à la sortie du limiteur absolu 21 l'une directement et l'autre par l'intermédiaire d'un circuit à retard 221 introduisant un délai d'un demi-temps Baud, un oscillateur 222 ayant une période d'un quart de temps Baud synchronisé avec un léger retard sur les transitions de la porte logique de type « ou exclusif » 220, un registre à décalage 223 à entrée de données série et sorties de données parallèles cadencé par l'oscillateur 222 et connecté en entrée à la sortie de la porte logique de type « ou exclusif » 220, et une porte logique de type « et » 224 à entrées multiples connectées aux sorties d'un étage sur quatre du registre à décalage 223, les sorties de trois étages consécutifs du registre à décalage 223 étant sautées entre chaque sortie d'étage reliée à la porte 224.

La porte logique de type « ou exclusif » 220 effectue alternativement deux comparaisons successives sur la durée d'un temps Baud. Pendant la première moitié du temps, elle compare la première moitié de l'élément de signal reçu avec la deuxième moitié retardée de l'élément de signal qui l'a précédé et trouve un résultat aléatoire. Pendant la deuxième moitié du temps, elle compare la première moitié retardée d'un élément de signal avec sa deuxième moitié et trouve un résultat toujours discordant entraînant un niveau logique 1 à sa sortie.

L'oscillateur 222 cadence le registre à décalage 223 de manière à provoquer un décalage après l'écoulement d'un délai d'un quart de temps Baud qui est la durée minimale sur laquelle un signal résultant d'un codage Wacx reste à un même niveau. Sa synchronisation avec un léger retard sur les transitions de la sortie de la porte logique de type « ou exclusif » 220 permet de commander les décalages du registre 223 alors qu'il reçoit un niveau stable à son entrée de données.

La porte logique de type « et » 224 repère, tous les troisièmes et tous les quatrièmes quarts de période Baud, le passage dans le registre à décalage 223 d'un motif présentant régulièrement un bit au niveau logique 1 tous les quatre bits. La longueur du registre étant suffisante pour qu'il y ait de façon quasi certaine des bits d'espacement au niveau logique zéro, la porte 224 délivre un signal périodique, de période Baud, au niveau logique 1 pendant les troisièmes et quatrièmes quarts des temps Baud et au niveau logique 0 en dehors. Ce signal est utilisé pour synchroniser la base de temps 23 dont un mode de réalisation est représenté à la figure 4.

Cette base de temps est prévue pour un circuit de détection directe 24 et un décodeur différentiel 25 .ayant des bascules déclenchées sur les fronts positifs c'est-à-dire montants du signal appliqué à leur entrée d'horloge.

Elle se compose essentiellement d'un oscillateur contrôlé en tension 231, d'un circuit à verrouillage de phase asservissant la phase de l'oscillateur 231 sur le signal délivré par le circuit de récupération de rythme Baud 22, d'un diviseur 232 engendrant un signal d'horloge $H_2$ à la cadence Baud du signal récupéré, et d'un circuit 233 d'élaboration de signaux d'échantillonnage $H_3H_4$ commandant les bascules du circuit de détection directe 24 et d'un signal de commande $H_5$ de l'adressage du multiplexeur 26.

Le circuit à verrouillage de phase de l'oscillateur contrôlé en tension 231 comporte essentiellement un comparateur de phase 234 déclenché par les fronts positifs du signal d'horloge $H_2$ à la cadence Baud délivré par le diviseur 232 et du signal engendré par le circuit de récupération de rythme 22, et un circuit d'intégration 235 reliant la sortie du comparateur de phase 234 à l'entrée de commande en tension de l'oscillateur 231.

Le comparateur de phase 234 comporte une bascule de type D 340 déclenchée par les fronts positifs, mise à un par les fronts positifs du signal engendré par le circuit de récupération de rythme 22 et à zéro par les fronts positifs du signal d'horloge à la cadence Baud $H_2$ délivré par le diviseur 232. Pour ce faire, cette bascule 340 a son entrée D portée constamment au niveau logique 1, son entrée d'horloge CP connectée à la sortie du circuit de récupération de rythme 22 et son entrée de remise à zéro R excitée par des impulsions synchrones avec les fronts positifs du signal d'horloge $H_2$. Ces impulsions sont obtenues à l'aide d'une porte logique de type « et » à deux entrées 341 recevant le signal d'horloge $H_2$ l'une directement l'autre par l'intermédiaire d'un circuit 342 introduisant un faible retard et d'un inverseur, non référencé, symbolisé dans la figure 4 par un simple cercle disposé au niveau de cette autre entrée.

Le comparateur de phase atteint son équilibre lorsque les impulsions présentes sur ses deux entrées sont en quadrature. Le signal engendré par le circuit de récupération de rythme 22 présentant un front positif en milieu de période Baud, le signal d'horloge $H_2$ aura un front montant en début de période Baud.

Le circuit 233 d'élaboration des signaux d'échantillonnage $H_3$, $H_4$ du signal reçu et de commande $H_5$ de l'adressage du multiplexeur 26 comporte un circuit à retard 330 apportant un retard d'un huitième de temps Baud T/8 au signal d'horloge $H_2$ pour engendrer le signal de commande $H_5$ d'adressage du multiplexeur 26 dont les transitions se présentent au milieu des premier et troisième quarts de temps Baud du signal reçu, un circuit à retard 331 apportant un retard d'un quart de temps Baud T/4 au signal de commande $H_5$ pour engendrer le signal d'échantillonnage $H_3$ du signal reçu au milieu de chaque deuxième quart de temps Baud, et un circuit à retard 332 apportant un retard d'un quart de temps Baud T/4 au signal d'échantillonnage $H_3$ pour engendrer le signal d'échantillonnage $H_4$ du signal reçu au milieu de chaque troisième quart de temps Baud.

# EP 0 109 658 B1

## Revendications

1. Equipement de transmission synchrone de données comportant
— un émetteur assemblant les données à transmettre, disponibles sous forme d'informations binaires, par groupes successifs de deux informations binaires transmis l'un après l'autre au cours d'intervalles de temps égaux et successifs de durée T dits temps Baud, au moyen d'éléments de signal occupant chacun un temps Baud et prenant chacun, en bande de base, une parmi quatre formes possibles qui sont définies par les fonctions

$$\pm \text{signe} \left( \sin \frac{2\,\pi t}{T} \right) \; ; \quad \pm \text{signe} \left( \cos \frac{2\,\pi t}{T} \right)$$

et qui correspondent aux quatre valeurs possibles pour un groupe,
— et un récepteur comportant un circuit de récupération de cadence Baud opérant à partir des transitions des éléments de signal reçus et un circuit de détection directe recouvrant les informations binaires à partir d'un échantillonnage périodique des éléments de signal reçus effectués sous le contrôle du circuit de récupération de rythme Baud caractérisé en ce que le circuit de détection directe comporte :
— des moyens d'échantillonnage (241, 242) des éléments de signal reçus opérant uniquement au cours des deuxième et troisième quarts de temps Baud et
— des moyens logiques déduisant à partir des seuls échantillonnages des éléments de signaux reçus au cours de leurs deuxième et troisième quarts de temps Baud les valeurs binaires correspondantes des informations émises.

2. Equipement de transmission selon la revendication 1 avec, dans le récepteur un circuit de récupération de cadence Baud comportant des moyens de comparaison (220) assurant la comparaison de deux versions des éléments de signal reçus retardées l'une par rapport à l'autre d'un délai égal à un demi-temps Baud caractérisé en ce qu'il comporte en outre :
— des moyens de détection des troisième et quatrième quarts de temps Baud des éléments de signal reçus (223, 224) repérant dans le signal délivré par les moyens de comparaison et sur une durée de plusieurs temps Baud, les durées d'un demi-temps Baud espacées entre elles d'un demi-temps Baud au cours desquelles la comparaison est toujours négative
— et une base de temps comportant un oscillateur à la fréquence Baud synchronisé par les moyens de détection des troisième et quatrième quarts de temps Baud.

3. Equipement de transmission synchrone de données selon la revendication 1 ou 2 dans lequel la forme d'un élément de signal codant un groupe de deux informations résulte d'un choix entre les fonctions

$$\text{signe} \left( \sin \frac{2\,\pi t}{T} \right) , \quad \text{signe} \left( \cos \frac{2\,\pi t}{T} \right)$$

dicté par la valeur de l'une des informations de chaque groupe et d'un choix entre les versions complémentées ou non de ces fonctions de forme dicté par l'autre information de chaque groupe caractérisé en ce que l'émetteur comporte associé au codeur direct, un codeur différentiel (18, 12) opérant sur l'autre information de chaque groupe avant son utilisation pour le choix des versions complémentées ou non des fonctions de forme et en ce que le récepteur comporte associé au circuit de détection directe, un décodeur différentiel (25) redonnant à l'autre information sa forme primitive après détection de sa forme différentielle par reconnaissance du caractère complémenté ou non de l'élément de signal reçu.

## Claims

1. A synchronous data transmission equipment comprising
— a transmitter assembling the data to be transmitted and available in binary form into successive groups of two binary informations, which are transmitted one after the other during successive equal time intervals of duration T, called the Baud period, by means of signal elements each of which occupies one Baud period and each of which takes, in the base band, one out of four possible shapes defined by the functions :

$$\pm \text{sign} \left( \sin \frac{2\,\pi t}{T} \right) \; ; \quad \pm \text{sign} \left( \cos \frac{2\,\pi t}{T} \right)$$

which shapes correspond to the four possible values of a group,
— and a receiver comprising a Baud clock rate recovery circuit triggered by the transitions of the signal elements received, and a direct detection circuit recovering the binary informations by a periodic sampling of the received signal elements under the control of the Baud clock rate recovery circuit, characterized in that the direct detection circuit comprises :

— sampling means (241, 242) for sampling the received signal elements only during the second and third quarters of the Baud periods, and

— logic means deriving the binary values corresponding to the transmitted informations from the sole samplings of the signal elements received during the second and third quarters of the Baud periods.

2. A transmission equipment according to claim 1, having, in the receiver, a Baud clock rate recovery circuit comprising comparator means (220) adapted to ensure the comparison of two versions of the received signal elements, one being delayed relative to the other by half of one Baud period, characterized in that it further comprises :

— detection means for detecting the third and fourth quarters of the Baud periods of the received signal elements (223, 224), adapted to identify, in the delivered signal by the comparator means and during several Baud periods, the intervals lasting half a Baud period, which are separated from one another by half Baud periods and during which the comparison always delivers negative results,

— and a time base comprising a Baud frequency oscillator synchronized by the detection means of the third and fourth quarters of the Baud period.

3. A synchronous data transmission equipment according to claims 1 or 2, in which the shape of a signal element encoding a group of two informations results from the selection between the functions

$$\text{sign} \left( \sin \frac{2\,\pi t}{T} \right) \; ; \quad \text{sign} \left( \cos \frac{2\,\pi t}{T} \right)$$

imposed by the value of one of the informations in each group and of a selection between the complemented or non-complemented versions of these functions having a shape imposed by the other information of each group, characterized in that the transmitter includes a differential encoder (18, 12) associated with the direct encoder and operating on the other information in each group before its application to select the complemented or the non-complemented version of the selected shape function, and that the receiver includes a differential decoder (25) associated with the direct detector circuit and returning the other information to its initial shape after its differential shape has been detected by recognising the complemented or non-complemented nature of the received signal element.

**Patentansprüche**

1. Synchrone Datenübertragungsanlage mit

— einem Sender, welcher die zu übertragenden, in Binärform vorliegenden Daten in aufeinanderfolgende Gruppen zu zwei Binärinformationen zusammenfügt, die während gleichlanger und aufeinanderfolgender Zeitintervalle der Dauer T, genannt Baudzeit, mit Hilfe von Signalelementen übertragen werden, die jedes eine Baudzeit besetzt und im Basisband eine von vier möglichen Formen annehmen, welche durch die Funktionen

± Vorzeichen (sin 2 πt/T) ; ± Vorzeichen (cos 2 πt/T)

definiert sind und vier möglichen Werten je Gruppe entsprechen,

— und einem Empfänger, welcher einen Kreis zur Wiedergewinnung des Baudtaktes auf der Basis der empfangenen Signalübergänge und einen direkten Detektorkreis besitzt, der die binären Informationen durch periodische Probeentnahme der empfangenen Signalelemente unter der Kontrolle des Baudtaktwiedergewinnungskreises wiedergewinnt, dadurch gekennzeichnet, daß der direkte Detektorkreis

— Mittel zur Probenentnahme (241, 242) der empfangenen Signalelemente nur während des zweiten und dritten Viertels der Baudzeit, und

— logische Mittel enthält, welche allein aus den Probenentnahmen der während der zweiten und dritten Viertel der Baudzeit empfangenen Signalelemente die den gesendeten Informationen entsprechenden Binärwerte ableiten.

2. Übertragungsanlage nach Anspruch 1, mit einem im Empfänger befindlichen Baudtaktwiedergewinnungskreis, welcher Vergleichsmittel (220) zum Vergleichen zweier Versionen der empfangenen Signalelemente aufweist, von denen eine in Bezug auf die andere um eine Dauer entsprechend einer halben Baudzeit verzögert ist, dadurch gekennzeichnet, daß sie weiter aufweist :

— Mittel zur Erfassung der dritten und vierten Viertel der Baudzeit (223, 224) der empfangenen Signalelemente, welche in dem von den Vergleichsmitteln gesendeten Signal und während einer Dauer von mehreren Baudzeiten jeweils die Dauer von halben Baudzeiten ermittelt, welche voneinander um eine halbe Baudzeit getrennt sind und während denen der Vergleich stets negativ ausfällt,

— und eine Zeitbasis mit einem Baudfrequenzoszillator, der von den Erfassungsmitteln der dritten und vierten Viertel der Baudzeit synchronisiert wird.

3. Synchrone Datenübertragungsanlage nach Anspruch 2, in welcher die Form eines eine Gruppe von zwei Informationen kodieren Signalelements aus einer Auswahl aus den Funktionen

$$\text{Vorzeichen (sin 2 } \pi t/T) \text{ ; Vorzeichen (cos 2 } \pi t/T)$$

resultiert, die durch den Wert einer der Informationen jeder Gruppe diktiert wird, und einer Auswahl aus den komplementierten oder nicht-komplementierten Versionen dieser Funktionen, die durch die andere Information jeder Gruppe diktiert wird, dadurch gekennzeichnet, daß der Sender einen dem direkten Kodierer zugeordneten Differentialkodierer (18, 12) aufweist, der auf die andere Information jeder Gruppe vor deren Benutzung für die Auswahl der komplementierten oder nicht-komplementierten Versionen einwirkt, und daß der Empfänger einen dem direkten Detektorkreis zugeordneten Differentialkodierer (25) aufweist, der der anderen Information ihre ursprüngliche Form nach Erfassung ihrer Differentialform durch Erkennung der komplementierten oder nicht-komplementierten Natur des empfangenen Signalelements zurückgibt.

## FIG.1

## FIG.2

# FIG. 3

# FIG. 4

2